Europäisches Patentamt

(19) European Patent Office

Office européen des brevets

(11) Numéro de publication : **0 004 519**

**B1**

(12) **FASCICULE DE BREVET EUROPÉEN**

(45) Date de publication du fascicule du brevet :
**25.03.81**

(21) Numéro de dépôt : **79420014.7**

(22) Date de dépôt : **13.03.79**

(51) Int. Cl.³ : **C 22 C 21/00**

(54) Alliage d'aluminium et ses applications.

(30) Priorité : **20.03.78 FR 7808833**

(43) Date de publication de la demande :
**03.10.79 (Bulletin 79/20)**

(45) Mention de la délivrance du brevet :
**25.03.81 Bulletin 81/12**

(84) Etats contractants désignés :
**DE GB NL SE**

(56) Documents cités :
**FR - A - 1 348 558**
**FR - A - 1 497 831**
**FR - A - 2 135 642**

(73) Titulaire : **CEGEDUR SOCIETE DE TRANSFORMA-TION DE L'ALUMINIUM PECHINEY**
**66, Avenue Marceau**
**F-75361 ParisCédex 08 (FR)**

**FORGES DE CRANS**
**Cran Gevrier**
**F-74000 Annecy (FR)**

(72) Inventeur : **Boutin, François-Régis**
**Rue de la Gare**
**F-38730 Virieu-sur-Bourbre (FR)**
Inventeur : **Deleuze, Michel**
**"Le Gros Noyer" Quintal**
**F-74000 Annecy (FR)**
Inventeur : **Marchive, Daniel**
**Lot Flavin Le Villard**
**F-38500 Coublevie Voiron (FR)**
Inventeur : **Reze, René**
**9 Cité Capayrou**
**F-82100 Castelsarrasin (FR)**

(74) Mandataire : **Mougeot, Jean-Claude et al**
**PECHINEY UGINE KUHLMANN 28, rue de Bonnel**
**F-69433 Lyon Cedex 3 (FR)**

Imprimerie Jouve, 17, rue du Louvre, 75001 Paris, France

0 004 519

## Alliage d'aluminium et ses applications

La présente invention concerne un alliage d'aluminium au Si-Mn présentant des caractéristiques améliorées pendant et après exposition à température élevée et une excellente aptitude à l'émaillage et aux autres traitements de cuisson.

Les alliages aluminium-manganèse, en particulier le 3003 selon la désignation de l'Aluminium Association, sont utilisés pour la fabrication d'articles émaillés. La rigidité après recuit est meilleure que pour l'aluminium 1050 (aluminium à 99,5 %) mais la tenue en service de l'émail déposé, mesurée par le SPALLTEST selon la spécification ASTM C 486 est insuffisante et, d'autre part, la résistance au bosselage des produits finis, par exemple les casseroles, n'est pas satisfaisante. De plus, les caractéristiques mécaniques du 3003 chutent très rapidement dès qu'on monte en température.

L'alliage selon l'invention permet d'améliorer sensiblement les caractéristiques mécaniques par rapport au 3003 aussi bien à chaud qu'après traitement thermique de recuit ou de cuisson d'un revêtement et assure une meilleure tenue en service de l'émail déposé lorsqu'on l'utilise pour la fabrication d'articles émaillés.

Cet alliage a pour composition (en % en poids) :

Mn  0,9  à  1,5
Si  1  à  1,5
Cr  0,05  à  2
Mg  < 0,2
Cu  < 0,2

et contient du Fe en quantité supérieure ou égale à 0,4, du nickel en quantité supérieure ou égale à 0,05 %, avec Fe + Ni + Co compris entre 0,8 et 2, les autres éléments éventuels étant en quantité totale inférieure à 0,2 %, le reste étant de l'aluminium.

L'addition de silicium concourt à l'obtention d'une bonne rigidité à l'état recuit et n'a pas l'inconvénient d'une addition de magnésium. On sait en effet qu'un moyen classique d'augmenter les caractéristiques mécaniques des alliages aluminium-manganèse consiste à effectuer une addition de magnésium, (alliages 3004, 3005 par exemple). Cette addition a, par contre, un effet défavorable sur la tenue en service de la couche d'émail sauf à effectuer un traitement chromatant qui n'est pas autorisé pour les articles culinaires.

Outre leur rôle proprement métallurgique dans l'alliage, les éléments du groupe Fe, Ni, Co ont une influence favorable sur l'adhérence de l'émail. L'addition de nickel, en particulier, permet d'améliorer les caractéristiques mécaniques à chaud de l'alliage.

Les propriétés de l'émail sont particulièrement intéressantes lorsqu'on l'utilise à l'état écroui quart-dur (état H12 selon la norme française NF A 02-006). Dans ce cas, en effet, la limite élastique et la charge de rupture après exposition à chaud sont nettement améliorées sans que l'allongement diminue de manière trop importante.

L'alliage selon l'invention peut être avantageusement utilisé soit dans des applications où le métal est exposé à la température pendant un certain temps ou à des intervalles répétés, par exemple pour des pots d'échappement de véhicules routiers, des échangeurs de températures, en particulier des radiateurs d'automobiles, des parois d'étuve, des collecteurs d'énergie solaire, soit dans des applications où le métal doit subir un traitement à chaud d'émaillage, laquage, vernissage, revêtement antiadhésif, etc...

Les propriétés de l'alliage selon l'invention seront illustrées par les exemples suivants qui n'ont aucun caractère limitatif.

## Exemple 1 :

On a coulé en semi-continu sous forme d'une plaque 70 × 380 × 1 000 mm un alliage de composition suivante (% en poids) :

Mn  1,14
Si  1,23
Fe  0,71
Ni  0,76
Cr  0,15
Cu  < 0,01
Mg  < 0,01
Ti  < 0,02
Reste  aluminium

La plaque a été chauffée 8 heures à 500 °C, laminée à chaud jusqu'à 12 mm, puis laminée à froid jusqu'à 3 mm et recuite 6 heures à 450 °C. On a mesuré les caractéristiques mécaniques (limite élastique R 0,2, charge de rupture Rm et allongement A)

— à l'état recuit,

2

— après émaillage, la cuisson se faisant à 560 °C avec montée en température de 30 mn, maintient pendant 10 minutes et refroidissement à l'air calme,

— après revêtement de polytétrafluoréthylène (PTFE) sans émaillage,

— après émaillage sur une face et revêtement de polytétrafluoréthylène sur l'autre face.

Les résultats ont été rassemblés au tableau I et comparés aux résultats obtenus dans les mêmes conditions avec un alliage 3003 de composition suivante :

Mn 1,15
Si 0,21
Cu 0,11
Fe 0,56
Cr 0,02
Reste aluminium

TABLEAU I

|  | Etat recuit | | | Après émaillage | | |
|---|---|---|---|---|---|---|
|  | R 0,2 MPa | Rm MPa | A % | R 0,2 MPa | Rm MPa | A % |
| Alliage suivant invention | 75 | 164 | 30 | 68 | 172 | 26,5 |
| 3003 | 42 | 117 | 43,3 | 41 | 121 | 47,1 |

TABLEAU I (suite)

|  | Après PTFE | | | Emaillage + PTFE | | |
|---|---|---|---|---|---|---|
|  | R 0,2 MPa | Rm MPa | A % | R 0,2 MPa | Rm MPa | A % |
| Alliage suivant invention | 68 | 164 | 30,6 | 68 | 166 | 28,7 |
| 3003 | 44 | 116 | 41 | 43 | 120 | 42,2 |

On constate une augmentation très importante des caractéristiques mécaniques de traction tout en conservant un allongement satisfaisant.

La tenue de l'émail a été caractérisée par un test de pliage. L'échantillon est d'abord décapé pendant 5 minutes dans un bain à 5 % de phosphate trisodique, porté à 70-75 °C, rincé, séché et trempé dans une fritte ; on fait sécher dans une étuve à 150-170 °C avant de porter l'échantillon à 560-570 °C pendant 10 minutes.

Après refroidissement des échantillons, on plie la tôle sur elle-même et on compare à des échantillons étalons (cinq qualités).

L'échantillon réalisé avec l'alliage selon l'invention répond à la qualité la meilleure, c'est-à-dire que le métal est toujours entièrement recouvert par l'émail alors que l'échantillon réalisé avec le 3003 présente des petites plaques où l'émail a sauté.

Exemple 2 :

On a coulé en semi-continu une plaque de 800 × 300 × 1 580 mm en alliage de composition suivante (% en poids) :

Mn 1,13
Si 1,22
Fe 0,67
Ni 0,80
Cr 0,15
Ti 0,02
Cu < 0,01
Mg < 0,01
Reste aluminium

**0 004 519**

Après un réchauffage de 8 heures à 500 °C, un laminage à chaud jusqu'à 9 mm et un laminage à froid jusqu'à 3 mm, une partie du métal a été recuite pendant 7 heures (état 0) à 450 °C, l'autre partie après recuit 9 heures à 460 °C a subi un laminage à froid complémentaire pour ramener l'épaisseur de 3 à 2,7 mm (état H12).

On obtient alors les caractéristiques suivantes :

TABLEAU II

|  | Avant émaillage | | | Après émaillage | | |
|---|---|---|---|---|---|---|
|  | R 0,2 MPa | Rm MPa | A % | R 0,2 MPa | Rm MPa | A % |
| Etat 0 | 88 | 152 | 29,4 | 65 | 153 | 25,0 |
| Etat H12 | 151 | 171 | 12,5 | 84 | 159 | 22,6 |

On constate qu'à l'état H12, après émaillage, la limite élastique est fortement améliorée sans que l'allongement diminue de façon notable. On dispose ainsi d'un moyen supplémentaire d'augmenter les caractéristiques après exposition à température élevée tout en conservant une bonne aptitude à l'emboutissage.

Enfin, on a comparé les caractéristiques mécaniques à chaud après 100 heures de maintien à la température d'essai pour l'alliage précédent à l'état 0 et à l'état H12, et pour l'alliage 3003 mentionné dans l'exemple 1.

Ces résultats sont rassemblés au tableau III.

TABLEAU III

| Température d'essai | | 20 °C | | | 150 °C | | | 250 °C | | |
|---|---|---|---|---|---|---|---|---|---|---|
| Alliage état | | R 0,2 MPa | Rm MPa | A % | R 0,2 MPa | Rm MPa | A % | R 0,2 MPa | Rm MPa | A % |
| Selon | 0 | 75 | 164 | 30 | 57 | 99 | 52 | 40 | 60 | 54 |
| l'invention | H 12 | 151 | 171 | 13 | 98 | 112 | 24 | 71 | 83 | 25 |
| 3003 | 0 | 41 | 110 | 40 | 35 | 77 | 47 | 25 | 44 | 65 |

On constate qu'à l'état recuit, l'alliage selon l'invention présente des caractéristiques mécaniques à chaud nettement améliorées par rapport à celles du 3003. D'autre part, l'utilisation de produits à l'état H12 améliore encore ces caractéristiques.

Exemple 3 :

On a coulé en semi-continu des plaques de section transversale de 1 120 mm × 250 mm en alliage ayant la composition suivante (% en poids) :

| Mn | 1,02 |
|---|---|
| Si | 1,00 |
| Fe | 0,68 |
| Ni | 0,45 |
| Cr | 0,13 |
| Ti | 0,01 |
| Cu | < 0,01 |
| Mg | < 0,01 |

Reste aluminium

4

**0 004 519**

qui ont été écroûtées, réchauffées 12 h à 600 °C, laminées à chaud jusqu'à 12 mm puis à froid jusqu'à 3 mm et recuites à 450 °C pendant 6 h (2 h à la température de maintien).

On a ensuite mesuré les caractéristiques mécaniques dans l'état de recuit, après émaillage et après émaillage + revêtement PTFE, effectués dans les mêmes conditions que celles utilisées à l'exemple 1. Les résultats obtenus sont les suivants :

TABLEAU IV

| Etat recuit | | | Après émaillage | | | Après émaillage + PTFE | | |
|---|---|---|---|---|---|---|---|---|
| R 0,2 MPa | Rm MPa | A % | R 0,2 MPa | Rm MPa | A % | R 0,2 MPa | Rm MPa | A % |
| 81 | 145 | 24 | 90 | 151 | 22 | 79 | 143 | 25 |

Ces caractéristiques sont notablement supérieures à celles du 3003. (voir Tableau I).

Exemple 4 :

Un alliage de la composition suivante (% en poids) :
Mn     1,00
Si     1,10
Fe     0,73
Ni     0,14
Cr     0,15
Ti     0,01
Cu   < 0,01
Mg   < 0,01
Reste aluminium

a été transformé dans les mêmes conditions que celles utilisées à l'exemple 3.

Les tôles obtenues à l'état recuit (état 0) ont été tractionnées à chaud après un maintien de 100 h à la température d'essai.

Les résultats obtenus sont reportés au tableau V suivant, comparativement aux résultats obtenus pour l'alliage 3003 dans le même état 0.

TABLEAU V

| Température d'essai | 20 °C | | | 150 °C | | | 250 °C | | |
|---|---|---|---|---|---|---|---|---|---|
| Alliages | R 0,2 MPa | Rm MPa | A % | R 0,2 MPa | Rm MPa | A % | R 0,2 MPa | Rm MPa | A % |
| Selon l'invention 0,14 % Ni | 49 | 146 | 34 | 47 | 121 | 44 | 39 | 85 | 47 |
| 3003 | 41 | 110 | 40 | 35 | 77 | 47 | 25 | 44 | 65 |

**Revendications**

1. Alliage d'aluminium caractérisé par la composition suivante (% en poids) :
Mn 0,9  à 1,5
Si   1,0  à 1,5
Cr   0,05 à 0,2
Fe $\geq$ 0,4
Ni $\geq$ 0,05
Fe + Ni + Co  0,8 à 2
Mg < 0,2
Cu < 0,2

5

autres éléments éventuels en quantité totale inférieure à 0,2 reste aluminium.

2. Application de l'alliage d'aluminium selon la revendication 1 à la fabrication d'articles revêtus par cuisson d'un revêtement tel qu'un émail, une laque, un vernis ou un produit antiadhésif.

3. Application de l'alliage selon la revendication 1 à la fabrication d'articles soumis à une température élevée tels que des échangeurs de température, des collecteurs d'énergie solaire, des dispositifs d'échappement ou des parois d'étuve.

**Ansprüche**

1. Aluminiumlegierung, gekennzeichnet durch die folgende Zusammensetzung (Gew. %) :

Mn    0,9 -1,5
Si     1,0 -1,5
Cr    0,05-0,2
Fe   ≥ 0,4
Ni   ≥ 0,05
Fe + Ni + Co   0,8-2
Mg  < 0,2
Cu  < 0,2

mögliche andere Elemente in einer Gesamtmenge unter 0,2 Al Rest.

2. Verwendung der Aluminiumlegierung nach Anspruch 1 zur Herstellung von durch Einbrennen mit einem Überzug, wie z.B. einem Email, einem Lack, einem Firnis oder einem antiadhäsiven Stoff, bekleideten Gegenständen.

3. Verwendung der Aluminiumlegierung nach Anspruch 1 zur Herstellung von einer erhöhten Temperatur ausgesetzten Gegenständen, wie z.B. Temperaturaustauschern, Sonnenenergiekollektoren, Auspuffeinrichtungen oder Trockenkammerwänden.

**Claims**

1. An aluminium alloy characterised by the following composition (% by weight) :

Mn    0.9  to 1.5
Si     1.0  to 1.5
Cr    0.05 to 0.2
Fe   ≥ 0.4
Ni   ≥ 0.05
Fe + Ni + Co   0.8 to 2
Mg  < 0.2
Cu  < 0.2

any other elements in a total quantity of less than 0.2 remainder aluminium.

2. Use of the aluminium alloy according to Claim 1 for the production of articles coated by baking with a coating such as an enamel, a lacquer, a varnish or a non-stick product.

3. Use of the alloy according to Claim 1 for the production of articles subjected to elevated temperature such as heat exchangers, solar energy collectors, exhaust devices or drying cupboard walls.